# EUROPEAN PATENT APPLICATION

(11) **EP 0 741 297 A1**
(43) Date of publication of application: **06.11.1996**
(21) Application number: 96303013.5
(22) Date of filing: 30.04.1996
(51) Int. Cl.: G01N 35/10, B01L 3/02

(54) **Method for avoiding volume reduction of first drop**

(30) Priority: 01.05.1995 US 432307
(71) Applicant: JOHNSON & JOHNSON CLINICAL DIAGNOSTICS, INC., Rochester, New York 14650-0880 (US)
(72) Inventor: Foote, Andrew Shelley, Rochester, New York 14624 (US); Hamann, John Eric, Rochester, New York 14613 (US); Shaw, James David, Hilton, New York 14468 (US); Wicks, Randy Scott, Fairport, New York 14450 (US)
(74) Representative: Mercer, Christopher Paul

(57) **Abstract**

A method for avoiding a reduction in volume of the first drop dispensed by a pump from a dispensing tip stored immersed within the liquid to be dispensed. The method comprises the steps of: a) while the tip is still immersed in the liquid, dispensing enough air from the tip into the liquid to create an air bubble which, when the tip is withdrawn from the liquid, will break apart, b) withdrawing the tip from the reservoir to cause the bubble to separate therefrom, optionally producing a skin of liquid across the tip orifice,
c) aspirating the optional skin and a small amount of air into the tip at least two times, d) ejecting more volume of air than was aspirated in step c), leaving at most only traces of liquid in the tip, e) adjusting the pump so as to position it at about the center point of its dispense/aspirate cycle, f) immersing the tip back into the reservoir of liquid, g) aspirating an amount of the liquid from the reservoir into the tip, and dispensing the aspirated amount back into the reservoir, the amount being enough to substantially clean out the traces of liquid, and h) thereafter, aspirating the preselected amount of liquid for subsequent dispensing.

## Description

This invention relates to a method for dispensing from a dispensing tip, non-sample liquid in an analyzer, wherein the tip is stored between aspirating and dispensing events immersed in a reservoir of the liquid that is to be dispensed.

Clinical analyzers using dried slide test elements, for example, the analyzers now manufactured under the trademark "Ektachem"® by Clinical Diagnostic Systems, Inc., have long used reference liquid in conducting a differential potentiometric measurement using dual identical ion-selective electrodes and a paper bridge between them. Such reference liquid has been dispensed from a reservoir, using an aspirator comprising a dispensing tip (preferably that is disposable), a metering pump fluidly connected thereto, and a reservoir of reference liquid within which the tip is immersed while resting between dispensing events, called the "homing protocol", to avoid salts crusting onto and over the orifice of the dispensing tip. When liquid is needed for testing, the amount needed is aspirated into the tip. Then, for each slide test element to be tested, nominally 10 µL of reference liquid is dispensed onto one end of the bridge in a slide test element, for dispersion within the paper bridge until it makes a liquid junction contact with sample liquid similarly dispensed onto the other end of said bridge.

A recent development in such analyzers has been the addition of other assays to the menu, including immunorate assays. Such assays rely upon the formation of antibody complexes, some of which are labeled, if the target analyte (an antigen, usually) is present. The labeled antibodies not so complexed, hereinafter "free labeled antibodies", have to be separated from the complexed ones, to detect the amount of target analyte. This is done by a wash step, which preferentially uses the same kind of aspirator, pump, liquid reservoir, and homing protocol as does the reference liquid aspirator.

We have discovered that a problem exists in such reference liquid aspirator homing protocol, at least when the technique is transferred to the wash liquid for immunoassays, that is, the drops that are dispensed do not so readily tolerate deviations from the nominal amount (12 µL for wash liquid). The reason, in the case of immunoassays, is that a greater precision is required to be certain that all of the free labeled antibodies are indeed washed out of the region to be detected. The problem that arises is, that for some reason that was not known, keeping the dispenser tip of the aspirator immersed in the liquid for extensive periods of time between aspirations, tends to produce a first drop thereafter, that deviates substantially from nominal volumes - usually on the minus side. That is, the first drop can be as small as 4-5 µL, which is too small to adequately wash the immunorate slide test elements. This is only a first drop effect, as subsequent drops have not seriously deviated from nominal values.

It has been very difficult to identify the cause of this problem. The first attempt was to believe that some interaction at the interface between the piston and seals, was the problem, and the solution was to dither the pump with the tip submerged, just prior to aspiration for testing. However, this dithering failed to be successful, and in some cases produced just the opposite effect - a much too large quantity that was aspirated.

We have discovered the cause of the problem, after several failed attempts, and have provided a solution.

More specifically, we have discovered the problem is that the pump and tip tend to form a bubble appended from the tip, which is then aspirated and then dispensed so as to reduce the first drop volume, and that such bubbles require a vigorous protocol to eliminate them. This invention is then that protocol.

More specifically, there is provided a method of avoiding a first drop effect when aspirating a preselected amount of liquid into a dispenser tip having a tip orifice, from a reservoir of the liquid within which the tip has been immersed, using a metering pump fluidly connected to the tip. The method comprises the steps of
a) while the tip is still immersed in the liquid, dispensing enough air from the tip into the liquid to create an air bubble which, when the tip is within or withdrawn from the liquid, will separate from the tip,
b) withdrawing the tip from the reservoir to cause any bubble attached to separate, optionally producing a skin of liquid across the tip orifice,
c) aspirating the optional skin and a small amount of air into the tip at least two times, the amount of air so aspirated being at least 8 microliters,
d) ejecting more volume than was aspirated in step c) at a speed sufficient to cause the liquid of the skin to be ejected into air space above the reservoir of liquid, leaving at most only traces of liquid in the tip,
e) adjusting the pump so as to position it at about the center point of its dispense/aspirate cycle,
f) immersing the tip back into the reservoir of liquid,
g) aspirating an amount of the liquid from the reservoir into the tip, and dispensing the aspirated amount back into the reservoir, the amount being enough to substantially clean out the traces of liquid, and
h) thereafter, aspirating the preselected amount of liquid for subsequent dispensing.

Accordingly, it is an advantageous feature of the invention that a dispensing tip can be stored at its rest or "home" position while immersed within the reservoir of liquid that is to be subsequently aspirated, without adversely affecting the volume of the first drop dispensed from the tip.

It is a related advantageous feature of the invention that such storage of the dispensing tip can be used with reference liquids for potentiometric assays, as well as for wash liquids of immunorate assays.

Other advantageous features will become apparent upon reference to the following Detailed Description, when read in light of the attached drawings.
Fig. 1 is a fragmentary elevation view in section of prior art, illustrating also the environment of the invention;
Fig. 2 is a graph of drop volumes from several pump tests, illustrating the problem;
Fig. 3 is a fragmentary elevational view in section of the problem that existed prior to this invention;
Figs. 4A and 4B are views similar to Fig. 3, illustrating a comparative example, namely a failed attempt to solve the problem;
Figs. 5A - 5K are views similar to Fig. 3, with the schematic addition of the metering pump, illustrating the steps of the invention; and
Fig. 6 is a plot of drop volumes resulting from this invention, by drop number in the sequence of drops.

The invention is described in connection with the preferred embodiments, wherein a disposable dispensing tip is of a particular preferred shape, is immersed in wash liquid while at rest in its "home" position, is mounted in a preferred aspirator probe, and is pressurized and depressurized by a pump using a piston and piston chamber. In addition, the invention is useful whether or not a) the tip is disposable or has a particular shape, b) the liquid in which it is immersed is wash liquid or includes any particular ingredient in the liquid, c) the aspirator probe is that which is preferred herein, or d) pressurizing is done by a piston within a piston chamber. Indeed, the invention has been found to be particularly useful in the reference liquid dispensing discussed in the Background, particularly for certain assays that are particularly sensitive, for example, Na⁺.

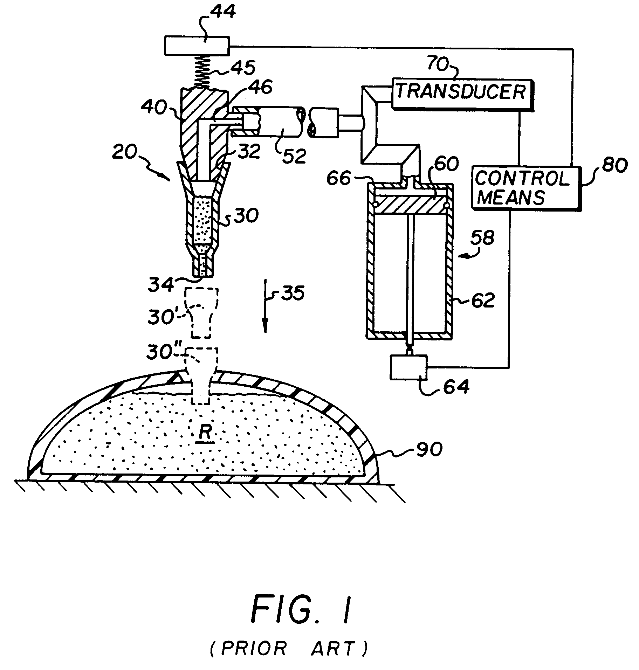

As shown in Fig. 1, the invention is used in a clinical analyzer, using an aspirator probe 20 comprising a housing 40 supporting a disposable dispensing tip 30 having an orifice 34. The tip mounts on surface 32 of probe 20, and is connected via fluid passageways 46 and 52 to a metering pump 58 and optionally also to a transducer 70. Probe 20 is raised and lowered, arrow 35, by a conventional drive 44 and spring 45, in response to control means 80 that also controls the pump 58 via a drive motor 64, as dictated in part by pressures detected by transducer 70. Pump 58 preferably uses a piston 60 operating within a piston chamber 62, having a downstream outlet end 66 proximal to passageway 52. All of this is conventional and is taught, for example in US-A-5,133,392. Also conventional is reservoir housing 90 which confines a reservoir of wash liquid R into which orifice 34, at least, of tip 30 is immersed when the probe 20 is at rest (shown in phantom as 30''). A useful housing is shown in US-A-5,248,056. Tip 30 also goes through intermediate positions, one of which is shown as 30'.

Any composition can be used for the wash liquid. One that has been found particularly useful comprises hydrogen peroxide, an electron transfer agent, and surfactants.

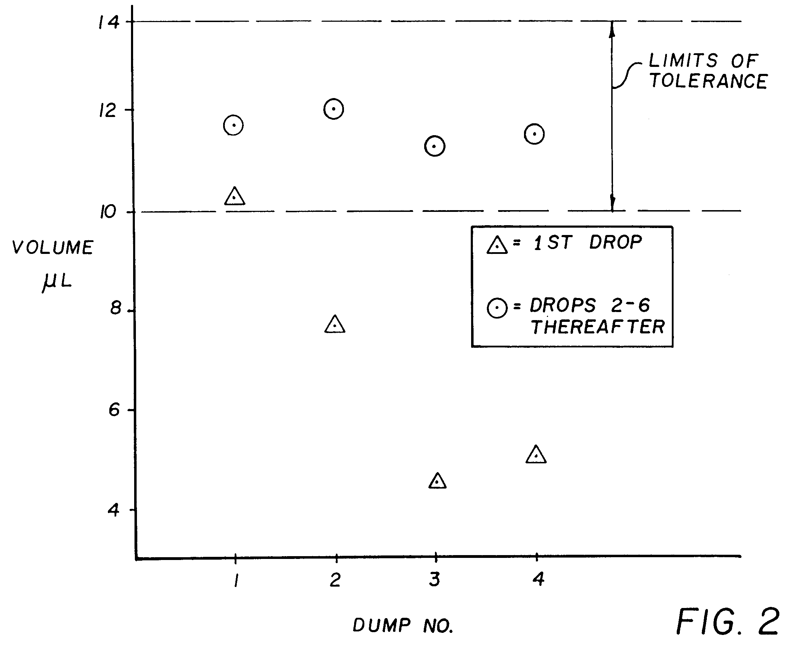

The problem arises when any one of the following conditions occurs: a) if tip 30 remains immersed for more than 10 minutes, b) the probe 20 has to be initialized, for example, after servicing, or c) after a new tip is placed on probe 20 (again requiring initialization). The problem specifically is, Fig. 2, when the liquid is aspirated after event a), b), or c) and then dispensed, the first drop, shown as a triangle, is likely to have markedly reduced volume from the nominal 12 µL, compared to all subsequent drops (drops 2-6 shown in the circles), regardless of the pump that is tested. (All drops were dispensed following the same pump protocol, so that their volumes theoretically should have been substantially the same.) In the data of Fig. 2, the limit of tolerance was ±2µL, so the first drops of pumps 2, 3, and 4 were unacceptably low. Even the first drop of pump number 1 was low in volume, although acceptable.

What then was causing this problem?

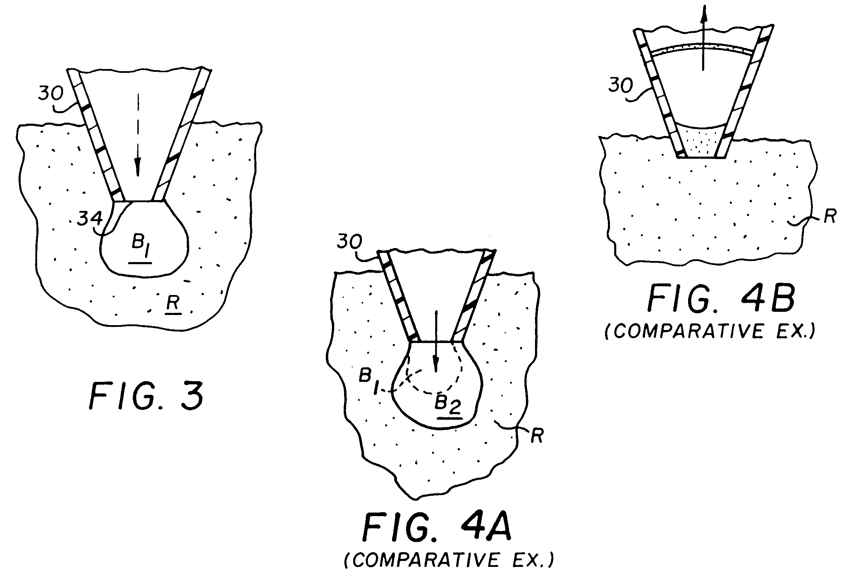

We discovered that an interface effect was occurring, Fig. 3, between tip 30 and liquid R. Specifically, due primarily to temperature changes, vapor pressure changes, and changes in primarily to temperature changes and changes in ambient air pressure, a bubble of air B1 forms pendant from orifice 34. If normal aspiration is attempted under such conditions, bubble B1 is aspirated in along with a little liquid, and since the bubble displaces what would have been the desired liquid, the volume of the first drop dispensed after inactivity is short-changed.

As a comparative example, Figs. 4A and 4B illustrate what was tried as a solution, and which failed. The pump (not shown), still fluidly attached to tip 30, was dithered, that is, some air was expelled, Fig. 4A, which acted to enlarge the air bubble to size B₂. Then, Fig. 4B, aspiration occurred. However, this failed to always solve the problem of the bubble and inaccurate volumes.

The solution then, when any of conditions a), b), or c) above-described occurs, is to do the following steps:

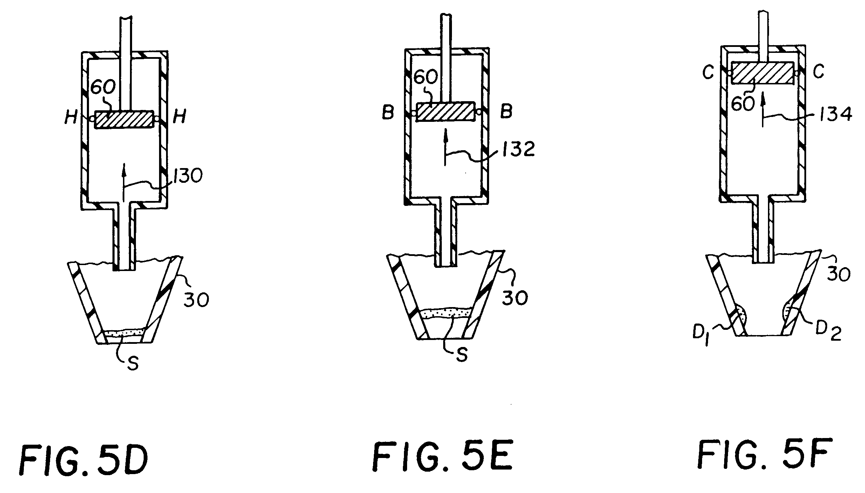

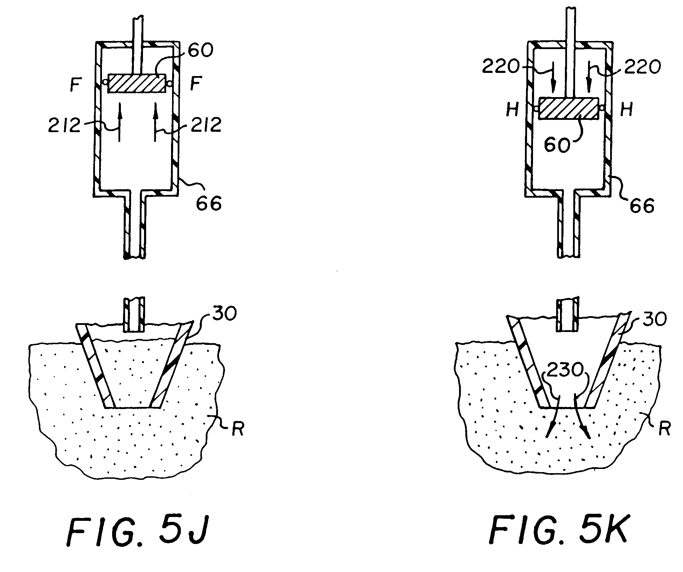

Fig. 5A shows tip 30 immersed in liquid R for, for example, greater than 10 minutes. It is presumed, therefore, that a bubble Bᵢ of some kind is appended to orifice 34. Tip 30 is fluidly connected, as schematically shown by a tube 100, to pump chamber 62 of pump 58. At this junction, piston 60 is preferably in its "home" position shown as H-H, which most preferably is 17 µL from downstream end 66. Tip 30 is presumed to be empty. However, under certain atmospheric conditions, bubble Bᵢ can be reversed - that is, a small quantity of liquid R can have been aspirated into the tip, shown in phantom as R'.

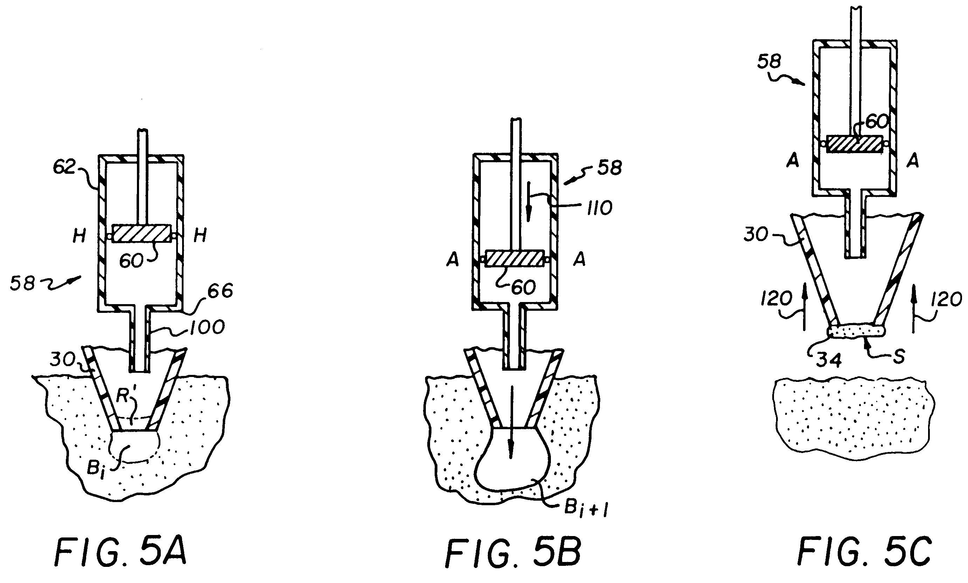

In any case, the first step, Fig. 5B, is to push a certain quantity of air out of tip 30 by advancing piston 60, arrow 110, to its position shown as A-A, causing an air bubble Bᵢ₊₁ to form within the liquid R surrounding the tip. The amount of air so pushed out, and hence the amount of advance of piston 60, need only be that which is necessary to create a volume for bubble Bᵢ₊₁ that is large enough so that, when tip 30 and bubble Bᵢ₊₁ are withdrawn, Fig. 5C, the bubble has separated. "Separation" means, physically departing or bursting. (If liquid R' has already been aspirated, Fig. 5A, then the amount of air that is expelled has to take this into account, for example, has to be increased. On amount that has been found useful for this wash liquid and this size of tip 30 (containing a total volume of 285 µL) is 10 µL.

Next, Fig. 5C, tip 30 is withdrawn, arrows 120, (pump 58 and its piston 60 stay in the same position) from liquid R. Because of the size of bubble Bᵢ₊₁, it breaks, and leaves either nothing at orifice 34 (not shown), or most commonly, a skin of fluid S covering the orifice. It is this skin, which has to be completely removed, which requires the remaining steps.

Figs. 5D - 5F, piston 60 is withdrawn, arrows 130, 132, and 134, in several successive steps, so as to draw skin S into and up tip 30. The amount of withdrawal, and the number of times this occurs, can be varied. At a minimum, this is done at least two times to aspirate at least 8 microliters. Preferably this is done three times as shown, in which case a useful amount of air that is drawn in behind skin S, each time, Fig. 5D, is 3 µL. The delay between each of these steps of aspiration should be long enough to allow the fluid to equilibrate. A useful time of delay is 0.5 sec.

Alternatively, lesser volumes of air can be used particularly if the number of withdrawal steps exceeds three. Or piston withdrawal can occur only twice if the amount of air aspirated in each time is greater, for example, 5 µL each time. Still further, the amount of air aspirated in behind skin S can differ, for example, it can be 3 µL the first time, 4 µL the second, and 5 µL the third. However, we have found that more than one withdrawal in the steps of Figs. 5D - 5F, is required.

In some cases, by the time the withdrawal of arrow 134, Fig. 5F, has occurred, skin S has been broken apart into droplets, such as droplets D₁ + D₂. This however is not necessary.

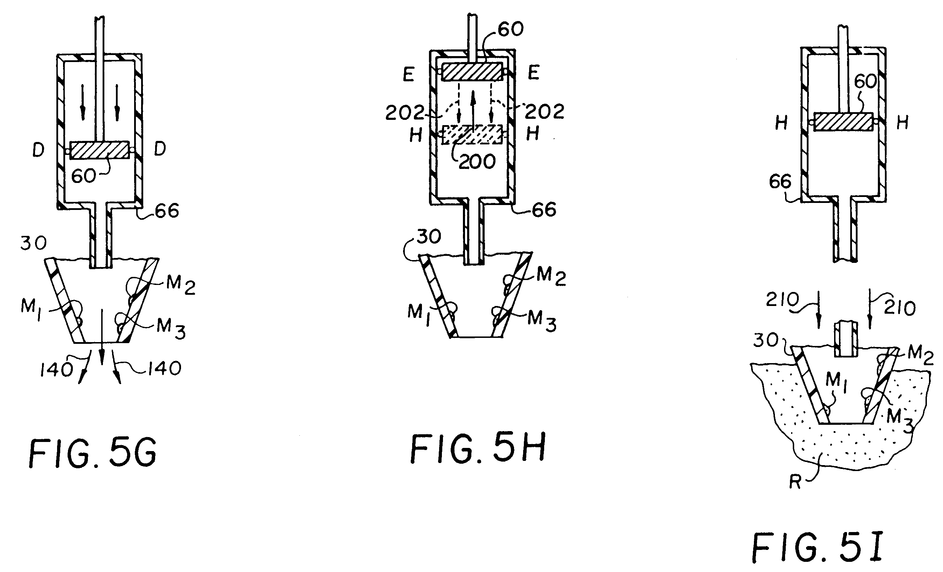

Next, Fig. 5G, piston 60 is advanced rapidly to position D-D to eject an amount of air out of tip 30 that is greater than that aspirated in the previous step. This comparatively large, rapid ejection also ejects most of the liquid of the skin or the remaining droplets D₁,D₂, as indicated by arrows 140. By "rapid", we mean at least 100 microliters per second. What is left are only traces of the liquid, as suggested by mini-drops M₁, M₂, and M₃.

To remove M₁, M₂, and M₃. the following occurs:

Fig. 5H, piston 60 is adjusted so that it ends up at about its center-point in the aspirate/dispense cycle, namely, half-way between the ends of the piston chamber, here shown as position H-H (the same position as in Fig. 5A). Unless pump 58 has a sensor, this is preferably done be withdrawing piston 60, arrow 200, all the way to the far distal end opposite end 66, position E-E, and then advancing the piston, arrows 202, the number of half-steps of drive motor 164 needed to advance the piston to the center-point (known in advance).

Next, tip 30 (only) is advanced back into liquid R, arrows 210, Fig. 5I, and an amount of liquid is aspirated into the tip, Fig. 5J, by withdrawing piston 60 to position F-F, arrows 212. The amount of liquid is that which is needed to clean out trace mini-drops M₁, M₂, and M₃. Useful amounts in this environment include 13 µL.

Last, Fig. 5K, piston 60 is advanced, arrows 220, enough to eject, arrows 230, all of the amount aspirated in the previous step, Fig. 5J, for example, back to position H-H. AT this point, aspirator probe 20 is ready to start aspirating liquid R to be used to wash a slide test element.

It will be appreciated by those skilled in the art that control means 80, Fig. 1, such as a microprocessor, can be readily programmed by conventional techniques to achieve the afore-described steps.

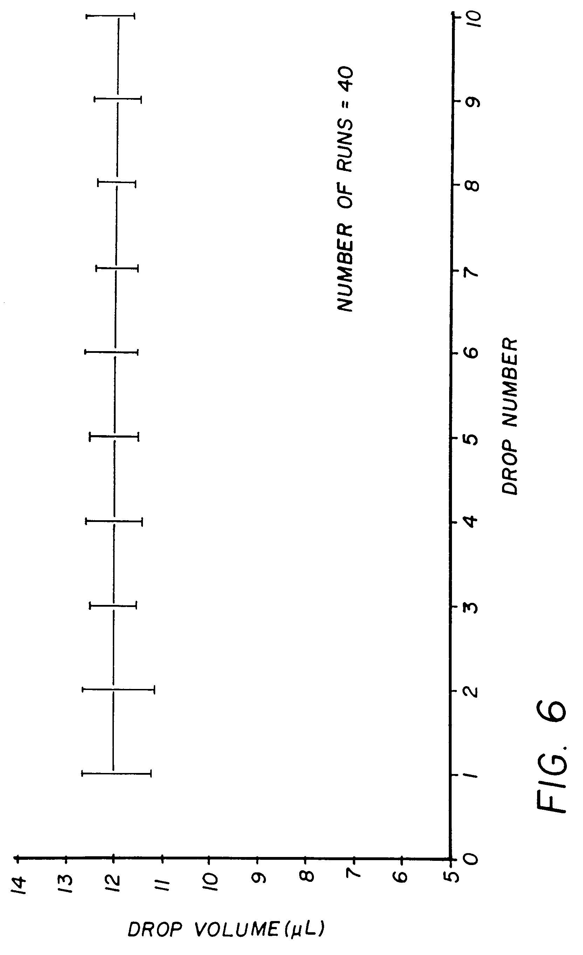

The benefit of the invention is illustrated in Fig. 6. 40 separate runs were conducted using the invention, and the volume of the drops dispensed as a result was measured, from the first drop (number one) to the 10th (number ten). The amounts of delay before the steps of the invention were initiated were varied. That is, drop number one represents a variety of delayed times, from one hour to as long as 16. In each and every case, the volume of drop number one was ±1 µL from the nominal 12 µL and did not differ in deviation substantially from the deviation noted in subsequent drops.

## Claims

1. A method of avoiding a first drop effect when aspirating a preselected amount of liquid into a dispenser tip having a tip orifice, from a reservoir of the liquid within which the tip has been immersed, using a metering pump fluidly connected to the tip, the method comprising the steps of:
a) while the tip is still immersed in the liquid, dispensing enough air from the tip into the liquid to create an air bubble which, when the tip is within or withdrawn from the liquid, will separate from the tip,
b) withdrawing the tip from the reservoir to cause any bubble attached to separate, optionally producing a skin of liquid across the tip orifice,
c) aspirating the optional skin and a small amount of air into the tip at least two times, the amount of air so aspirated being at least 8 microliters,
d) ejecting more volume than was aspirated in step c) at a speed sufficient to cause the liquid of the skin to be ejected into air space above the reservoir of liquid, leaving at most only traces of liquid in the tip,
e) adjusting the pump so as to position it at about the center point of its dispense/aspirate cycle,
f) immersing the tip back into the reservoir of liquid,
g) aspirating an amount of the liquid from the reservoir into the tip, and dispensing the aspirated amount back into the reservoir, the amount being enough to substantially clean out the traces of liquid, and
h) thereafter, aspirating the preselected amount of liquid for subsequent dispensing.

2. The method of claim 1, and further including repeating the steps a) - h) if more than 10 minutes expire before the next aspiration of a preselected amount of liquid.

3. The method of claim 1 or claim 2, wherein the amount of dispensed air in step a) is 10 µL.

4. The method of any one of claims 1 to 3, wherein the small amount of aspirated air in step c) is the same for each of the at least two times.

5. The method of claim 4, wherein the small amount of aspirated air in each instance of step c) is 3 µL.

6. The method of any one of claims 1 to 5, wherein the number of times in step c) is three.

7. The method of any one of claims 1 to 6, wherein the step a) ejects 10 µL of air.

8. The method of any one of claims 1 to 7, wherein the step e) comprises adjusting the pump so that it is capable only of pressurizing the tip for ejection, and thereafter counting the number of steps needed to position the pump at its nominal center-point of the dispense/aspirate cycle.

9. The method of any one of claims 1 to 8, wherein the amount of liquid in step g) in 13 µL.
